# EUROPEAN PATENT APPLICATION

(11) **EP 4 643 717 A1**
(43) Date of publication of application: **05.11.2025**
(21) Application number: 23908857.8
(22) Date of filing: 22.03.2023
(51) Int. Cl.: A47F 5/10, B65D 90/00

(54) **ADJUSTABLE CROSSBEAM-BASED LAYERING MECHANISM**

(30) Priority: 27.12.2022 CN 202211684179
(71) Applicant: Zhejiang Topsun Logistic Control Co., Ltd., Yuhuan Taizhou, Zhejiang 317600 (CN); Top Sun Intelligent Control Technology Research Institute (Hangzhou) Co., Ltd., Hangzhou, Zhejiang 310012 (CN)
(72) Inventor: XIAO, Chipeng, Taizhou, Zhejiang 317600 (CN); RUAN, Yunbo, Taizhou, Zhejiang 317600 (CN); NIU, Shengliang, Taizhou, Zhejiang 317600 (CN); ZHU, Zhengzhong, Taizhou, Zhejiang 317600 (CN)
(74) Representative: Elzaburu S.L.P.
(86) International application number: PCT/CN2023/083015
(87) International publication number: WO 2024/138901

(57) **Abstract**

The present disclosure discloses a layering movement mechanism having beams, includes the beams, lifting rails, movable support legs, and driving devices, where the movable support legs are in slide connection to the lifting rails and in transmission connection to the driving devices, the beams are connected to the movable support legs, and locking structures capable of locking the lifting rails are arranged on the movable support legs. When the layering movement mechanism having beams works, the driving devices drive the movable support legs to ascend and descend along the lifting rails. The locking structures are started after the movable support legs reach predetermined positions such that the movable support legs can reliably stop at the positions. Shelves and other bearing components can be supported by the beams, to synchronously move with the movable support legs, and form layers having required sizes after reaching expected positions on the lifting rails. According to the present disclosure, a layer height can be flexibly adjusted according to a specific requirement of storing and loading goods, and an adjustment is automatic, convenient and rapid. Moreover, efficiency of storing and loading goods can be greatly improved.

## Description

### TECHNICAL FIELD

The present disclosure relates to the field of warehousing logistics, and particularly relates to a layering movement mechanism having beams.

### BACKGROUND

When stacked or loaded in warehouses, stores, containers, and other places and facilities, goods often need to be placed separately due to different types, sizes, and places of receipt. In order to reduce sites and improve space utilization rates as much as possible, the goods are usually placed in layers on a multi-layer goods shelf. Accommodation spaces having different sizes are required for goods having different sizes. However, because each layer of an ordinary goods shelf has a fixed height, generally large-sized goods cannot be placed on the layer, and small-sized goods cannot fully occupy the layer, resulting in space waste. Therefore, users expect to flexibly adjust a height of each layer of a goods shelf according to specific needs. As disclosed in the invention patent with publication number CN113002921A, an adjustable layering goods shelf for a truck can be used to divide an interior of a compartment into a plurality of layers to store different goods, and a size of a space can be adjusted according to requirements. However, a layer height according to the present disclosure is complex to adjust, thereby affecting operation efficiency. Further, as disclosed in the invention patent with publication number CN109625102A for example, a truck having an automatic layering goods shelf for a compartment adopts the automatic layering goods shelf, a height of a compartment of the truck is fully used, and a carrying capacity of the truck is improved. However, a goods shelf automatic layering mechanism in the invention patent has a complex structure and occupies a large space.

### SUMMARY

In order to overcome the defects that an existing automatic goods shelf layering mechanism affects operation efficiency because of its complex adjustment, or affects a space utilization rate because of its complex structure, the present disclosure provides a layering movement mechanism having beams. Thus, a goods shelf can be layered more conveniently and efficiently while a space is fully used.

A technical solution of the present disclosure is as follows: a layering movement mechanism having beams includes beams, lifting rails, movable support legs, and driving devices. The movable support legs are in slide connection to the lifting rails and in transmission connection to the driving devices. The beams are connected to the movable support legs. Locking structures capable of locking the lifting rails are arranged on the movable support legs. When the layering movement mechanism having beams works, the driving devices drive the movable support legs to ascend and descend along the lifting rails. The locking structures are started after the movable support legs reach predetermined positions such that the movable support legs can reliably stop at the positions. Shelves and other bearing components can be supported by the beams, to synchronously move with the movable support legs, and form layers having required sizes after reaching expected positions on the lifting rails. According to the present disclosure, a layer height can be flexibly adjusted according to a specific requirement of storing and loading goods, and an adjustment is automatic, convenient and rapid. Moreover, efficiency of storing and loading goods can be greatly improved.

Preferably, the movable support legs include support leg bodies, press blocks, and rising and falling control blocks. The press blocks are hinged to the support leg bodies, and press block return torsion springs are arranged between the press blocks and the support leg bodies. The rising and falling control blocks are hinged to ends of the press blocks, and rising and falling control block return torsion springs are arranged between the rising and falling control blocks and the press blocks. Free ends of the rising and falling control blocks keep making contact with and pressing surfaces of the lifting rails. Locking grooves are uniformly distributed on the lifting rails. The locking structures are locking bosses arranged on back surfaces of the press blocks and capable of being snap-fitted in the locking grooves. The rising and falling control blocks can be turned, and have unfolded states and folded states. In a normal state, under actions of the rising and falling control block return torsion springs, the rising and falling control blocks are folded. Included angles between the rising and falling control blocks and the support leg bodies are reduced to minimum angles. The support leg bodies are lifted such that the locking bosses cannot make contact with the locking grooves. In this way, the movable support legs and the lifting rails are in unlocked states. When the movable support legs climb on the lifting rails, relative movements are generated between the rising and falling control blocks and the lifting rails, and friction forces between the rising and falling control blocks and the lifting rails act on the free ends of the rising and falling control blocks, such that returning forces of the rising and falling control block return torsion springs are overcome. Thus, the included angles between the rising and falling control blocks and the support leg bodies are gradually enlarged, and the entire support leg bodies are closer to the surfaces of the lifting rails. At this time, the locking bosses can make contact with the locking grooves. The movable support legs stop when the locking bosses enter the locking grooves. Since the locking bosses are in snap-fit with the locking grooves, the movable support legs cannot move back, and locking is formed. Moreover, the movable support legs and even the beams connected to the movable support legs are kept at stop positions. When the movable support legs climb to different heights on the lifting rails, different layer heights can be formed.

Preferably, inclined surfaces are arranged on the locking bosses. The inclined surfaces are oriented towards top ends of the lifting rails. The inclined surfaces have guide functions. When the movable support legs carry the beams and ascend along the lifting rails, pressures of the lifting rails on the inclined surfaces can be decomposed such that component forces promoting the press blocks to turn and the locking bosses to ascend can be obtained on the inclined surfaces. Thus, the movable support legs cannot be hindered when ascending.

Preferably, top ends of the press blocks are hinged to the support leg bodies. The locking bosses are located at bottom ends of the press blocks. The press blocks are hinged to the support leg bodies, such that a lever mechanism is formed. The locking bosses are located at positions farthest from press block hinge points. That is, relative to press block rotation points, the locking bosses are located at positions having maximum arms of force. Thus, the locking bosses have sensitive stress responses.

Preferably, chutes are provided on the lifting rails. Support leg protruding strips adapted to the chutes are arranged on back surfaces of the support leg bodies. The support leg protruding strips are slidably embedded in the chutes. The support leg protruding strips match the chutes, such that the movable support legs are in slide connection to the lifting rails.

Preferably, one ends of the rising and falling control blocks are hinged to the press blocks. End faces of the free ends of the rising and falling control blocks are oblique surfaces. The end faces of the free ends of the rising and falling control blocks in fully folded states are attached to the surfaces of the lifting rails. The rising and falling control blocks are inclined towards bottom ends of the lifting rails. The rising and falling control blocks in folded states are inclined towards the bottom ends of the lifting rails. In this way, no dead points exist when the rising and falling control blocks are turned. Original balance states can be changed as long as acting forces of the lifting rails on the end faces of the free ends of the rising and falling control blocks are slightly increased. Thus, the rising and falling control blocks can be unfolded more easily when the movable support legs move.

Preferably, press block mounting grooves are provided on the support leg bodies. The press blocks are mounted in the press block mounting grooves. Through such a structure, the press blocks can rotate on the support leg bodies along defined paths, and can be better embedded into the support leg bodies. Thus, structures of the movable support legs are more compact.

Preferably, the driving devices are electric motors. The driving devices are connected to the movable support legs by synchronous belts. The driving devices drive the movable support legs by the synchronous belts. The synchronous belts can be arranged close to a pillar or a wall. The structure is simple such that a less goods storage space can be occupied. The structure is especially suitable for limited spaces such as containers and compartments.

Preferably, synchronous belt press blocks are arranged on the movable support legs. The synchronous belt press blocks are fixed on the movable support legs by screws. The synchronous belts are pressed between the synchronous belt press blocks and the movable support legs. The synchronous belt press blocks press and fix the synchronous belts on the movable support legs such that the synchronous belts can drive the movable support legs.

Preferably, beam supports are connected to tops of the movable support legs. The beams are connected to the beam supports. The beam supports are transition structures between the movable support legs and the beams, such that the beams are suitable for being connected to the movable support legs.

The present disclosure has beneficial effects as follows:
Efficiency of adjusting a goods storage space is improved. According to the present disclosure, a layer can be flexibly established and a layer height can be flexibly adjusted according to a specific requirement of storing and loading goods, and an adjustment is automatic, convenient and rapid. Moreover, efficiency of storing and loading goods can be greatly improved.

The structure is compact, and a space utilization rate is high. According to the present disclosure, the overall structure is simple and compact, such that a less storage space is occupied.

### BRIEF DESCRIPTION OF DRAWINGS

FIG. 1 is a schematic structural diagram of the present disclosure;
FIG. 2 is a schematic structural diagram of partial structure according to the present disclosure;
FIG. 3 is a schematic diagram of a transmission structure between a driving device and a movable support leg according to the present disclosure;
FIG. 4 is a schematic diagram of a connection structure between a movable support leg and a synchronous belt according to the present disclosure;
FIG. 5 is a schematic structural diagram of a movable support leg according to the present disclosure;
FIG. 6 is a schematic diagram of a disassembled structure of a movable support leg according to the present disclosure;
FIG. 7 is a schematic diagram showing a folded state of a rising and falling control block of a press block on a movable support leg according to the present disclosure;
FIG. 8 is a schematic diagram showing an unfolded state of a rising and falling control block of a press block on a movable support leg according to the present disclosure;
FIG. 9 is a schematic diagram showing a matching state of a movable support leg and a lifting rail when a rising and falling control block of a press block on a movable support leg is folded according to the present disclosure;
FIG. 10 is a schematic diagram showing a matching state of a movable support leg and a lifting rail when a rising and falling control block of a press block on a movable support leg is unfolded according to the present disclosure;
FIG. 11 is a schematic diagram showing a matching state of a locking boss and a locking groove when a rising and falling control block of a press block on a movable support leg is unfolded according to the present disclosure; and
FIG. 12 is a schematic diagram showing a usage state of the present disclosure.

In the figures, 1-beam, 2-lifting rail, 201-locking groove, 202-chute, 3-movable support leg, 301-support leg body, 3011-support leg protruding strip, 3012-press block mounting groove, 302-press block, 3021-locking boss, 303-rising and falling control block, 304-synchronous belt press block, 305-beam support, 306-press block return torsion spring, 307-rising and falling control block return torsion spring, 4-driving device, 401-synchronous belt, 402-synchronous pulley, 403-driving wheel, and 5-container body.

### DETAILED DESCRIPTION

The present disclosure will be further described below in combination with the accompanying drawings and the particular Embodiments.

### Embodiment 1:

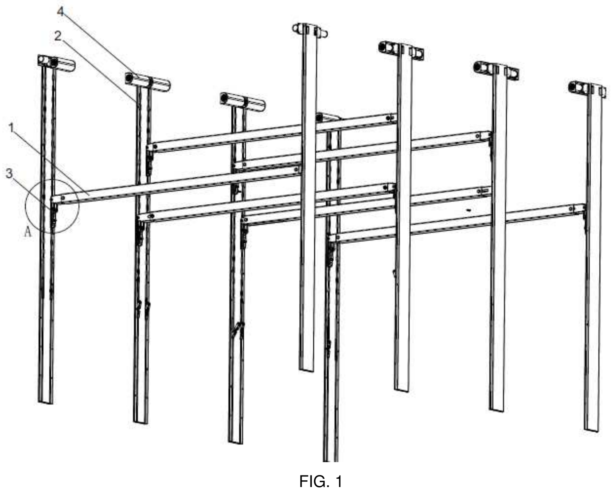

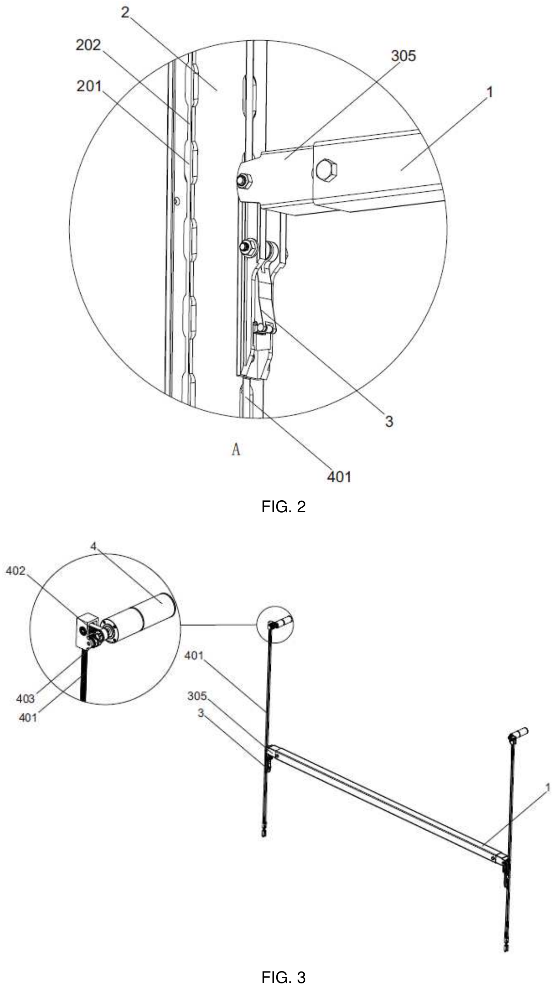

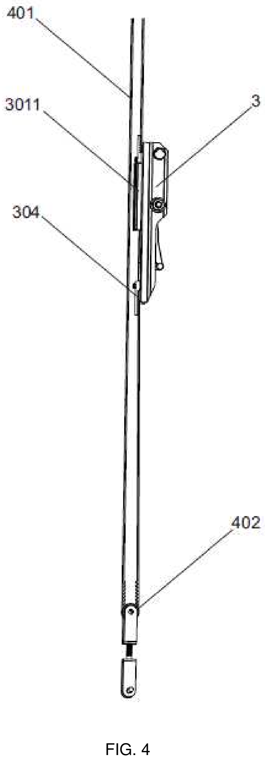

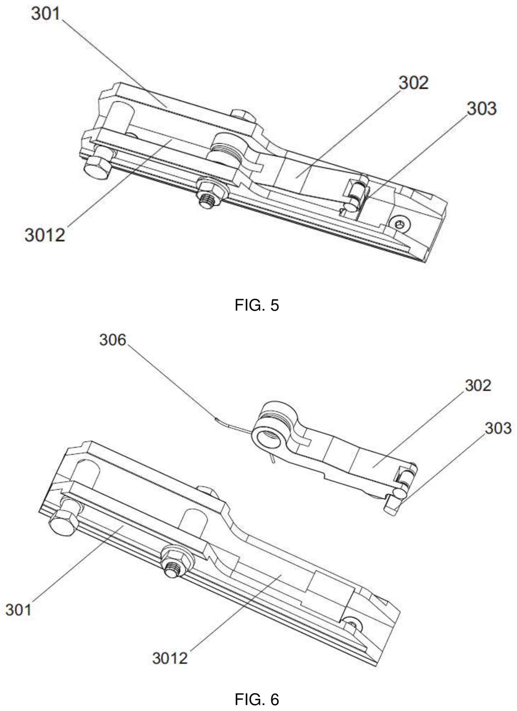

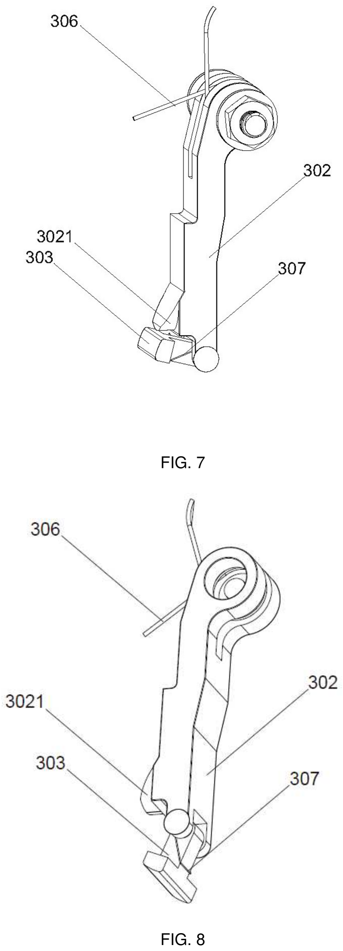

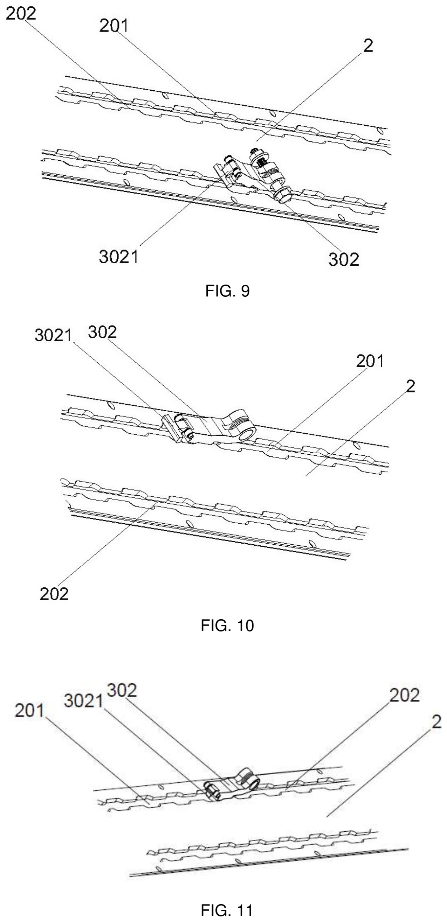

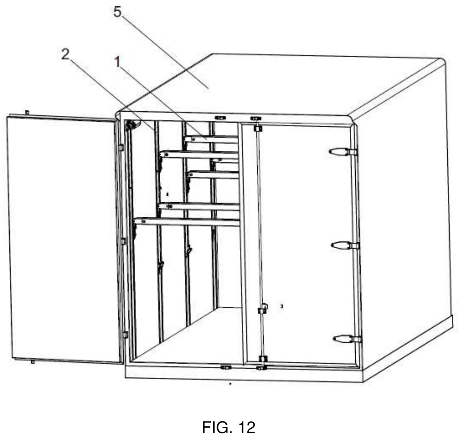

As shown in FIG. 1 to FIG. 12, a layering movement mechanism having beams is applied in a container. The mechanism includes the beams 1, lifting rails 2, movable support legs 3, driving devices 4, and a controller. The lifting rails 2 are symmetrically fixed on inner walls of two sides of a container body 5. The movable support legs 3 are in slide connection to the lifting rails 2 and in transmission connection to the driving devices. The beams 1 are connected to the movable support legs 3. Locking structures capable of locking the lifting rails 2 are arranged on the movable support legs 3. The movable support legs 3 include support leg bodies 301, press blocks 302, and rising and falling control blocks 303. The press blocks 302 are hinged to the support leg bodies 301, and press block return torsion springs 306 are arranged between the press blocks 302 and the support leg bodies 301. One end of each press block return torsion spring 306 abuts against a support leg body 301, and the other end thereof abuts against a press block 302. The rising and falling control blocks 303 are hinged to ends of the press blocks 302, and rising and falling control block return torsion springs 307 are arranged between the rising and falling control blocks 303 and the press blocks 302. One end of each rising and falling control block return torsion spring 307 abuts against a press block 302, and the other end thereof abuts against a rising and falling control block 303. Each rising and falling control block 303 is T-shaped. Free ends of the rising and falling control blocks 303 keep making contact with and pressing surfaces of the lifting rails 2. Locking grooves 201 are uniformly distributed on the lifting rails 2. The locking structures are locking bosses 3021 arranged on back surfaces of the press blocks 302 and capable of being snap-fitted in the locking grooves 201. Inclined surfaces are arranged on the locking bosses 3021. The inclined surfaces are oriented towards top ends of the lifting rails 2. Top ends of the press blocks 302 are hinged to the support leg bodies 301. The locking bosses 3021 are located at bottom ends of the press blocks 302. Two parallel chutes 202 are provided on each lifting rail 2. The locking grooves 201 are located at edges of openings of the chutes 202, such that widths of the openings of the chutes 202 are increased. A width of each locking boss 3021 is greater than a width of an opening of each chute 202 and slightly less than the width of the opening of the chute 202 at a locking groove 201. That is, at the locking grooves 201, the locking boss 3021 can be recessed into the locking grooves 201. At positions other than the locking grooves 201, the locking bosses 3021 cannot enter the chutes 202 and can only float outside the openings of the chutes 202. Support leg protruding strips 3011 adapted to the chutes 202 are arranged on back surfaces of the support leg bodies 301. The support leg protruding strips 3011 are slidably embedded in the chutes 202. Each chute 202 is a T-shaped groove having a small opening and a large bottom. A cross section of each support leg protruding strip 3011 is also an inverted T-shaped. The support leg protruding strips match the chutes 202 such that dislocation can be effectively prevented. One ends of the rising and falling control blocks 303 are hinged to the press blocks 302. End faces of the free ends of the rising and falling control blocks 303 are oblique surfaces. The end faces of the free ends of the rising and falling control blocks 303 in fully folded states are attached to the surfaces of the lifting rails 2. The rising and falling control blocks 303 are inclined towards bottom ends of the lifting rails 2. At this time, an included angle of 88 degrees is formed between each rising and falling control block 303 and a surface of a corresponding lifting rail 2. Press block mounting grooves 3012 are provided on the support leg bodies 301. The press blocks 302 are mounted in the press block mounting grooves 3012. Press block pivot shafts are arranged on groove walls of the press block mounting grooves 3012. The press block pivot shafts are connected to the press blocks 302. The driving devices 4 are electric motors. The driving devices 4 are connected to the movable support legs 3 by synchronous belts 401. Synchronous belt press blocks 304 are arranged on the movable support legs 3. A synchronous belt press block 304 is fixed at two ends of a support leg body 301 of each movable support leg 3 by a screw. Each synchronous belt 401 has two ends. The two ends are connected to two ends of a support leg body 301 in a one-to-one correspondence manner. Each end is pressed between a synchronous belt press block 304 and a support leg body 301. The driving devices 4 are fixed at the top ends of the lifting rails 2. A synchronous pulley 402 is arranged at each of a top end and a bottom end of each chute 202. An output end of each driving device 4 is connected to a driving wheel 403 by a key. The synchronous belts 401 are connected to the driving wheels 403 and the synchronous pulleys 402. Beam supports 305 are connected to tops of the movable support legs 3. The beam supports 305 are pipes. Ends of the beams 1 are inserted into the beam supports 305 and then connected to the beam supports 305 by bolts.

In a normal state, under actions of the rising and falling control block return torsion springs 307, the rising and falling control blocks 303 are folded. Included angles between the rising and falling control blocks 303 and the support leg body 301 are reduced to minimum angles. Free ends of the support leg body 301 are lifted such that the locking bosses 3021 cannot make contact with the locking grooves 201. In this way, the movable support legs 3 and the lifting rails 2 are in unlocked states. When the movable support legs 3 climb on the lifting rails 2, relative movements are generated between the rising and falling control blocks 303 and the lifting rails 2, and friction forces between the rising and falling control blocks 303 and the lifting rails 2 act on the free ends of the rising and falling control blocks 303, such that returning forces of the rising and falling control block return torsion springs 307 are overcome. Thus, the included angles between the rising and falling control blocks 303 and the support leg body 301 are gradually enlarged, and the entire support leg body 301 are closer to the surfaces of the lifting rails 2. At this time, the locking bosses 3021 can make contact with the locking grooves 201. When the movable support legs 3 ascend, once encounter the locking grooves 201, under actions of the press block return torsion springs 306, the locking bosses 3021 are recessed into the locking grooves 201, and the entire press blocks 302 are closer to the lifting rails 2. When the locking bosses 3021 ascend with the movable support legs 3 to reach the ends of the locking grooves 201, the inclined surfaces of the locking bosses 3021 press the ends of the locking groove 201. Pressing forces are decomposed, such that inclined normal forces are formed on the inclined surfaces to lift the locking bosses 3021 and even the press blocks 302. Thus, the locking bosses 3021 can be smoothly separated from the locking grooves 201. After leaving the locking grooves 201, since a width of each locking boss 3021 is larger than a width of an opening of each chute 202, the locking bosses 3021 cannot enter the chutes 202 and can only float outside openings of the chutes 202. The movable support legs 3 continue climbing smoothly without resistance. Position sensors are arranged in the locking grooves 201, or switches are arranged corresponding to positions of the locking grooves 201 in a control program, such that a stop node is formed. When the locking bosses 3021 enter the locking grooves 201, the driving devices 4 receive stop instructions from the controller. At this time, the movable support legs 3 can stop. Since the locking bosses 3021 are in snap-fit with the locking grooves 201, the movable support legs 3 cannot move back, and locking is formed. The movable support legs 3 and even the beams 1 connected to the movable support legs 3 are kept at stop positions. At positions other than the locking grooves 201, the driving devices 4 do not stop and automatically wait, and receive stop instructions when nearest stop nodes are reached. When the movable support legs 3 climb to different heights on the lifting rails 2, different layer heights can be formed. When the movable support legs 3 descend, under the control of the controller, the driving devices 4 first drive the movable support legs 3 to climb a little, such that it is ensured that the locking bosses 3021 are misaligned with the locking grooves 201. Then the driving devices 4 reverse to drive the movable support legs 3 to descend. During descending, friction forces between the rising and falling control blocks 303 and the lifting rails 2 are combined with elastic forces of the rising and falling control block return torsion springs 307, such that the rising and falling control blocks 303 are folded. The free ends of the support leg body 301 are lifted again, such that the locking bosses 3021 move away from the locking grooves 201. Thus, the movable support legs 3 and the lifting rails 2 are in unlocked states, and the movable support legs can freely descend.

### Embodiment 2:

The layering movement mechanism having beams is applied to a goods shelf in a warehouse. The lifting rails 2 are fixed on uprights of the goods shelf. Each chute 202 is a dovetail groove having a small opening and a large bottom. A cross section of each support leg protruding strip 3011 is trapezoidal. An included angle of 85 degrees is formed between a rising and falling control block 303 in a fully folded state and a surface of a corresponding lifting rail 2. The other portions are the same as those in Embodiment 1.

## Claims

1. A layering movement mechanism having beams, **characterized in that**, comprising the beams (1), lifting rails (2), movable support legs (3), and driving devices (4), the movable support legs (3) are in slide connection to the lifting rails (2) and in transmission connection to the driving devices, the beams (1) are connected to the movable support legs (3), and locking structures capable of locking the lifting rails (2) are arranged on the movable support legs (3).

2. The layering movement mechanism having beams according to claim 1, **characterized in that**, the movable support legs (3) comprise support leg bodies (301), press blocks (302), and rising and falling control blocks (303), the press blocks (302) are hinged to the support leg bodies (301), press block return torsion springs are arranged between the press blocks (302) and the support leg bodies (301), the rising and falling control blocks (303) are hinged to ends of the press blocks (302), rising and falling control block return torsion springs are arranged between the rising and falling control blocks (303) and the press blocks (302), free ends of the rising and falling control blocks (303) keep making contact with and pressing surfaces of the lifting rails (2), locking grooves (201) are uniformly distributed on the lifting rails (2), and the locking structures are locking bosses (3021) arranged on back surfaces of the press blocks (302) and capable of being snap-fitted in the locking grooves (201).

3. The layering movement mechanism having beams according to claim 2, **characterized in that**, inclined surfaces are arranged on the locking bosses (3021), and the inclined surfaces are oriented towards top ends of the lifting rails (2).

4. The layering movement mechanism having beams according to claim 2, **characterized in that**, top ends of the press blocks (302) are hinged to the support leg bodies (301), and the locking bosses (3021) are located at bottom ends of the press blocks (302).

5. The layering movement mechanism having beams according to claim 2, **characterized in that**, chutes (202) are provided on the lifting rails (2), support leg protruding strips (3011) adapted to the chutes (202) are arranged on back surfaces of the support leg bodies (301), and the support leg protruding strips (3011) are slidably embedded in the chutes (202).

6. The layering movement mechanism having beams according to claim 2, **characterized in that**, one ends of the rising and falling control blocks (303) are hinged to the press blocks (302), end faces of the free ends of the rising and falling control blocks (303) are oblique surfaces, the end faces of the free ends of the rising and falling control blocks (303) in fully folded states are attached to the surfaces of the lifting rails (2), and the rising and falling control blocks (303) are inclined towards bottom ends of the lifting rails (2).

7. The layering movement mechanism having beams according to claim 1, **characterized in that**, press block mounting grooves (3012) are provided on the support leg bodies (301), and the press blocks (302) are mounted in the press block mounting grooves (3012).

8. The layering movement mechanism having beams according to claim 1, **characterized in that**, the driving devices (4) are electric motors, and the driving devices (4) are connected to the movable support legs (3) by synchronous belts (401).

9. The layering movement mechanism having beams according to claim 8, **characterized in that**, synchronous belt press blocks (304) are arranged on the movable support legs (3), the synchronous belt press blocks (304) are fixed on the movable support legs (3) by screws, and the synchronous belts (401) are pressed between the synchronous belt press blocks (304) and the movable support legs (3).

10. The layering movement mechanism having beams according to any one of claims 1-9, **characterized in that**, beam supports (305) are connected to tops of the movable support legs (3), and the beams (1) are connected to the beam supports (305).
